# EUROPEAN PATENT APPLICATION

(11) **EP 3 495 444 A1**
(43) Date of publication of application: **12.06.2019**
(21) Application number: 18209720.4
(22) Date of filing: 03.12.2018
(51) Int. Cl.: C09K 5/10, C08L 81/06

(54) **N-TERTIARY BUTYL-N-METHYL FORMAMIDE AND ITS USE AS SOLVENT**

(30) Priority: 11.12.2017 EP 17206412
(71) Applicant: BASF SE, 67056 Ludwigshafen am Rhein (DE)
(72) Inventor: REISSNER, Thomas, 67056 Ludwigshafen (DE); MARION, Nicolas, 68300 Saint-Louis (FR); PANCHENKO, Alexander, 67056 Ludwigshafen (DE); KARL, Ulrich, 67056 Ludwigshafen (DE); HENNINGSEN, Michael, 67056 Ludwigshafen (DE)
(74) Representative: BASF IP Association

(57) **Abstract**

Use of a compound of formula I 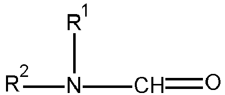 wherein R¹ represents an alkyl group with 1 to 4 carbon atoms and R² represents a non-aromatic hydrocarbon group with 4 to 6 carbon atoms as solvent, working fluid, heat transfer fluid or as cleaning agent.

## Description

Object of the present invention is the use of a compound of formula I 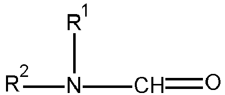
wherein R¹ represents an alkyl group with 1 to 4 carbon atoms and R² represents a non-aromatic hydrocarbon group with 4 to 6 carbon atoms
as solvent, working fluid, heat transfer fluid or as cleaning agent.

Liquid organic compounds are often used as solvents, working fluids, heat transfer fluids or as cleaning agents. For many technical applications polar liquid compounds are required. Compounds which have a certain polarity may, for example, solve polar organic polymers. Often it is desired that such polar compounds are aprotic. Aprotic compounds do not have hydrogen that easily dissociates as cation. A well-known polar aprotic solvent is N-methyl pyrrolidone.

There is always a demand for new liquid organic compounds that have satisfying or even improved properties and which may substitute solvents so far used. For example, WO 2015/024824 and WO 2015/197380 disclose the use of N-formyl morpholine as solvent for polyamide-imide and polyvinylidene fluoride and WO 2017/032735 discloses the use of N-formyl pyrrolidine as solvent for polyimides.

Patent application PCT/EP2017/055378 (INV 160067) discloses the use of N-formyl pyrrolidine or N-acetyl-pyrrolidine as solvent for sulfone polymers. Patent application PCT/EP2017/064469 (INV 160476) discloses the use of N-formyl morpholine pyrrolidine or N-acetyl-morpholine as solvent for sulfone polymers.

N-tertiary butyl-N-methyl formamide is known from Laurine A. LaPlanche and Max T. Rogers, Journal of the American Chemical Society, 1963, 85(23), pages 3728-3730 relating to studies on the configuration of N,N substituted amides. The synthesis of N,N disubstituted formamides by phase-transfer catalyzed N-alkylation is disclosed in Synthesis 1979, 7, pages 549 to 552 by Tadeusz Gajda, Anna Koziara, Stefan Zawadzki and Andrzej Zwierzak.

A suitable solvent for polymers should notably allow the preparation of solutions with high polymer content.

It was an object of the present invention to provide liquid chemical compounds that are suitable as solvents, working fluids, heat transfer fluids or as cleaning agents. It was further an object of the present invention to provide polymer solutions comprising such chemical compounds. Accordingly, the use of the compounds of formula I as solvent, working fluid, heat transfer fluid or as cleaning agent and polymer solutions comprising the compound of formula I have been found.

### To the compound

Preferably, R¹ in formula I is a methyl or ethyl groups. In a most preferred embodiment R¹ in formula I is a methyl group.

Preferably, R² in formula I is a non-aromatic hydrocarbon group with 4 carbon atoms.

More preferably, R² is a tertiary butyl group.

In a most preferred embodiment of the invention the compound of formula I is N-tertiary-butyl-N-methyl formamide:

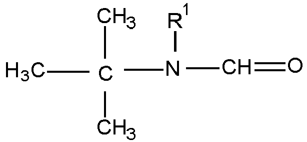

N-tertiary-butyl-N-methyl formamide is available in the market place.

N-tertiary-butyl-N-methyl formamide can easily be synthesized by reacting methyl tertiary butyl amine and methyl formiate.

### To the use of the compound

The compound of formula I may be used as solvent, working fluid, heat transfer fluid or as cleaning agent.

Preferably, the compound of formula I is used as a solvent.

In a more preferred embodiment the compound of formula I is used as solvent for polymers. Use as solvent for polymers shall include the dissolution of polymers in the solvent or the synthesis of polymers in the solvent. Preferably, use as solvent for polymers shall be the dissolution of polymers in the solvent.

In a preferred embodiment, the polymers are selected from sulfone polymers, polyamide, polyimide, polyamidimide, polyester and halogen substituted polymers.

Sulfone polymer comprise -SO₂- units in the polymer, preferably in the main chain of the polymer.

Preferably, sulfone polymers comprise at least 0.02 mol -SO2- units, in particular at least 0.05 mol -SO2- units per 100 grams (g) of polymer. More preferred are sulfone polymers comprising at least 0.1 mol -SO2- units per 100 g of polymer. Most preferred are sulfone polymers comprising at least 0.15 mol -SO2- units, in particular at least 0.2 mol -SO2- units per 100 g of polymer.

Usually sulfone polymers do comprise at maximum 2 mols -SO2- units, in particular at maximum 1.5 mols -SO2- units per 100 grams (g) of polymer. More preferred are sulfone polymers comprising at maximum 1 mol -SO2- units per 100 grams of polymer. Most preferred are sulfone polymers comprising at maximum 0.5 -SO2- units per 100 grams of polymer.

Preferably, the sulfone polymers comprise aromatic groups, shortly referred to as an aromatic sulfone polymers.

In a preferred embodiment, the sulfone polymers are aromatic sulfone polymers, which consist to at least 20% by, in particular to at least 30% weight of aromatic carbon atoms. An aromatic carbon atom is a carbon atom, which is part of an aromatic ring system.

More preferred are aromatic sulfone polymers, which consist to at least 40 % by weight, in particular to at least 45 % by weight of aromatic carbon atoms.

Most preferred are aromatic sulfone polymers, which consists to at least 50 % by weight, in particular to at least 55 % by weight of aromatic carbon atoms.

Preferably, the sulfone polymers comprise aromatic groups that are selected from 1,4-phenylen, 1,3-phenylene, 1,2-phenylene, 4,4'-biphenylene, 1,4-naphthylene, or 3-chloro-1,4-phenylene.

The aromatic groups may be linked by, for example, linking units selected from -SO2-, -SO-, -S-, -O-, -CH2-, -C(CH3)₂-.

In a preferred embodiment, the sulfone polymers consist to at least 80 % by weight, more preferably to at least about 90 % by weight and most preferably to at least 95, respectively at least 98 % by weight of groups selected from the above aromatic groups and linking groups.

Examples of most preferred sulfone polymers are polyethersulfone, polysulfone, polyphenylsulfone.

Polyethersulfone is a polymer of formula II 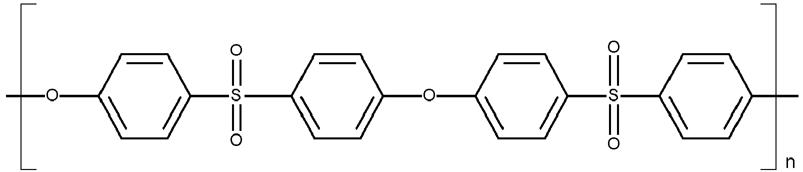 which is, for example, available from BASF under the trade name Ultrason® E.

Polysulfone is a polymer of formula III 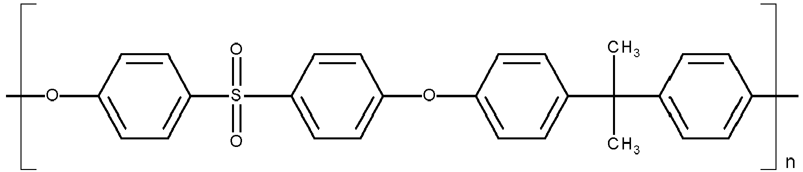 which is, for example, available from BASF under the trade name Ultrason® S.

Polyphenylsulfone is a polymer of formula IV 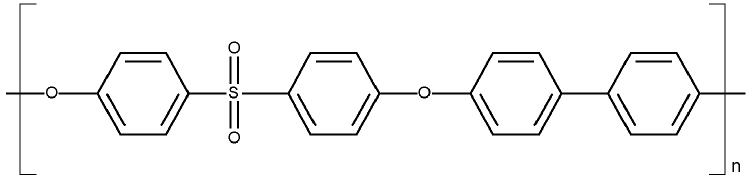 which is, for example, available from BASF under the trade name Ultrason® P.

Most preferred polymers are selected from polyethersulfone, polysulfone, polyphenylsulfone and poly vinyliden fluoride.

In a particularly preferred embodiment the polymer is a sulfone polymer and is in particular selected from polyethersulfone, polysulfone, polyphenylsulfone.

The use of the compound of formula I, II or III results as solvent for polymers results in polymer solutions comprising the respective polymer and the compound as solvent.

Other solvents may be used in addition to the compound of formula I and the polymer solutions may comprise other solvents besides compounds of formula I.
Other solvents might be, for example, N-methylpyrrolidone (NMP), N-ethylpyrrolidon (NEP), dimethylacetamide (DMAc), dimethylformamide (DMF), dimethylacrylamide (DMAD), dimethylsulfoxide (DMSO) or alkylencarbonates as such as in particular propylene carbonate.
In a preferred embodiment of the invention at least 30 % of all solvents of the polymer solution, more preferred at least 50 % of all solvents of the polymer solution and most preferred at least 70 % of all solvents of the polymer solution are compounds of formula I. In a particularly preferred embodiment of the invention, the compound of formula I is the only solvent in the polymer solution.

At low temperatures, the solubility of the polymer in the solvent might be limited. However, higher amounts of the polymer will become fully dissolved at higher temperatures. Hence polymer solutions comprising 10 to 50 % by weight of polymer (based on the total weight of the solution) are obtainable at temperatures of the polymer solution of at least 100°C, notably of at least 120°C. The temperature of the polymer solutions is usually not higher than 200°C.

The polymer solutions of this invention have a viscosity which allows easy handling of the polymer solutions and allows using them in technical applications, for example coating processes.

The polymer solutions may have various technical applications, one preferred technical application of polymer solutions is the use as coating material. Coating processes are often performed at higher temperature, for example temperatures of 120 to 200°C. respectively at temperatures of 120 to 180°C. Hence the solubility of the polymer in the solvent at such temperatures is required.

The compound of formula I, notably N-tertiary butyl-N-methyl formamide, are suitable as solvent, working fluid, heat transfer fluid or as cleaning agent. Compounds of formula I are notably suitable as solvents for polymers at high temperatures, for example at temperatures of 120 to 200°C, respectively at temperatures of 120 to 180°C.

### Examples

Abbreviations and compounds used in the examples:
- PPS: Polyphenylsulfone of formula IV (Poly(oxy-1,4-phenylene-1,4-sulphonyl-phenylene), obtained from Aldrich
- PES: Polyethersulfone of formula II, Ultrason® E 6020 of BASF
- PS: Polysulfone of formula III; Mw=35000, Mn=16000, obtained from Aldrich
- PVFD: Polyvinylidendifluoride, Mw= 534000, obtained from Aldrich
- TBMF: N-tertiary butyl-N-methyl-formamide
- NMP:: N-methyl pyrrolidone

### Synthesis of TBMF

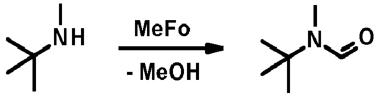

60,9 g (0,7 mol; 1,0 eq.) of methyl tertiary butyl amine and 126,0 g (2,1 mol; 3,0 eq.) of methyl formiate (MeFo) have been charged to a 300 milli-liter autoclave at room temperature (21 °C). The mixture was kept for 8 hours at 125°C. The pressure was 10 bar. Thereafter, the obtained reaction product was cooled to room temperature and distilled at 25 millibar and a temperature of 93°C at the head of the distillation column. TBMF was obtained with a yield of 67% by weight and a purity of more than 99% by weight.

Use of TBMF as solvent for polymers.

Different polymers were added to NMP (for comparison) and TBMF. It was determined how many parts by weight of polymer could be solved in 100 parts by weight of solvent at different temperatures.

The starting temperature was 20°C. The numbers in the table represent the parts by weight of a polymer which could at maximum be solved at 20°C. Thereafter the temperature of the obtained solution was increased to the temperatures listed in the table and at each temperature further polymer was added until the polymer did not solve anymore.

Results are listed in the table below. The numbers in the table represent the parts by weight of a polymer which could at maximum be solved at a given temperature.

In some cases, the solution was too viscous and could not be agitated anymore to get further polymer solved; this is indicated in the table by "v" for viscous.

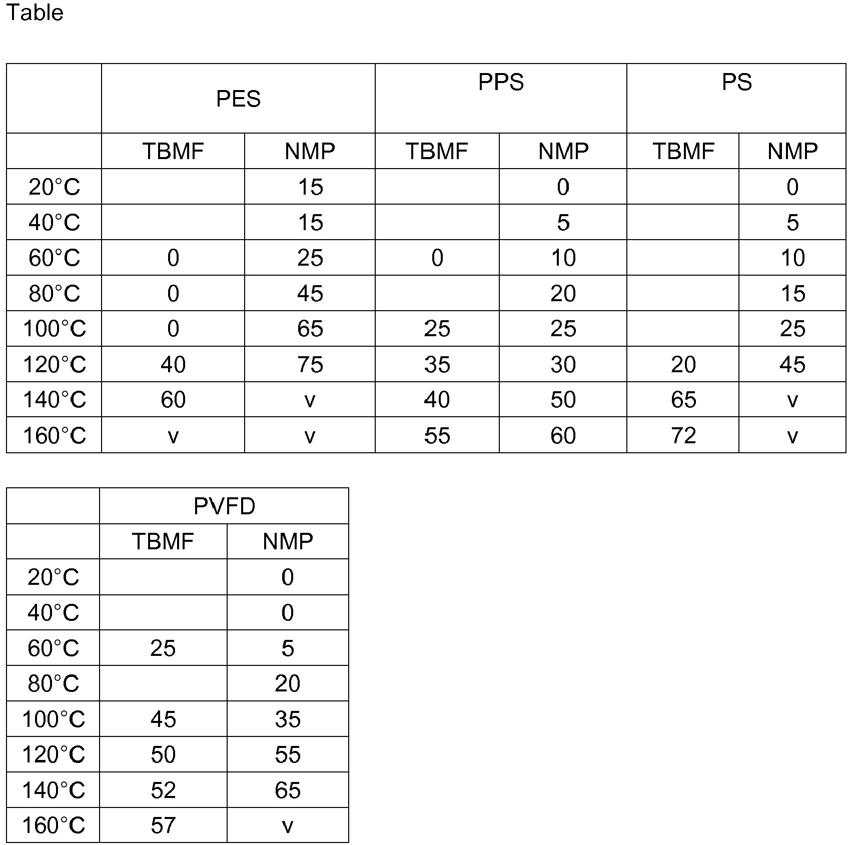

## Claims

1. Use of a compound of formula I 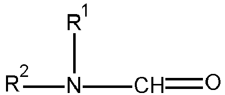
wherein R¹ represents an alkyl group with 1 to 4 carbon atoms and R² represents a non-aromatic hydrocarbon group with 4 to 6 carbon atoms
as solvent, working fluid, heat transfer fluid or as cleaning agent.

2. Use according to claim 1, wherein the compound of formula I is N-tertiary-butyl-N-methyl formamide

3. Use according to claim 1 or 2, wherein the compound is used as a solvent for polymers.

4. Use according to claim 3, wherein the polymers are selected from sulfone polymers, polyamide, polyimide, polyamidimide, polyester and halogen substituted polymers.

5. Use according to claims 3 or 4, wherein the polymers are selected from polyethersulfone, polysulfone, polyphenylsulfone and poly vinyliden fluoride.

6. Polymer solutions comprising a compound of formula I as solvent.

7. Polymer solutions according to claim 6 wherein at least 30 % of all solvents of the polymer solution are a compound of formula I.
